# EUROPEAN PATENT SPECIFICATION

(11) **EP 3 967 469 B1**
(45) Date of publication and mention of the grant of the patent: **07.06.2023**
(21) Application number: 20315408.3
(22) Date of filing: 11.09.2020
(51) Int. Cl.: B25J 9/16, B27M 1/08, B23Q 3/06, G05B 19/19

(54) **ASSEMBLING DEVICE FOR MANUFACTURING A PANEL ASSEMBLY**
MONTAGEVORRICHTUNG ZUR HERSTELLUNG EINER PLATTENANORDNUNG
DISPOSITIF D'ASSEMBLAGE POUR LA FABRICATION D'UN ENSEMBLE PANNEAU

(43) Date of publication of application: 16.03.2022
(73) Proprietor: Leko Labs S.A., 3895 Foetz (LU)
(72) Inventor: Cordier, François-Xavier, L-8017 Strassen (LU); Ferrari, Matteo, L-7233 Bereldange (LU); Carvalheiras, Catarina, L-4220 Esch-Sur-Alzette (LU)
(74) Representative: Reed Smith LLP

(56) References cited:
- US-A1- 2006 099 064

## Description

### Background of the invention

The present invention relates to the assembling and the manufacturing of a wooden panel assembly, in particular for the manufacturing of construction systems. In particular, the present invention intends to permit the manufacturing of wooden panel assemblies, in particular when they are made of a series of superimposed layers that comprise a series of wooden elements and insulation elements. The wooden elements usually have the shape of "slats". Those panels are known in the field as "Cross-Laminated Timber" or "CLT'.

Several techniques are known to manufacture wooden panel assemblies. A fist technique consists of having workers assembling the slats manually, but this has the drawback of being long and expensive.

A second technique consists of using tools that are electronically controlled. For instance, FR-2951975-A1 discloses an assembling machine including a wooden slat positioning tool and a wooden slat securing tool, which are both mounted on a frame in order to move them and make them operate at different positions on the wooden panel to be assembled.

A third technique consists of using an end-of-armtool, or "EOAT". This tool is already used in conventional robotic wooden handling production lines. It is usually disposed at the end of an articulated arm, which handles and moves the tool. The EOAT is then intended to perform a specific operation.

The drawback of such tools is that they are usually intended to perform a very specific operation. When it comes to assembling large panels with large slats, it thus requires accordingly large end-of-arm tools, often with vacuum components to grip the slats. This result is a static, inflexible and bulky frame, which is carried by the articulated arm, and which is not satisfying for wood panel assembling.

Also, in the known solutions using EOAT, the tool is intended to perform the very same task, repeatedly (i.e. for instance either picking, or positioning, or screwing a given workpiece), and it is intended to always operate the same type of workpiece (i.e. for instance either a wooden element, or an insulation element). This tool lacks enough flexibility to accommodate variations in the elements to be manipulated.

For instance, CN-106541483-A discloses a production line for wood pallets, which includes two arm-tool pairs 14-41 and 24-42, where the tool 41 and 42 of each pair is only a nailing station. Before nailing the transverse slats of the wood pallet, the proper positioning of these slats is achieved by a separate conveyor. Tools 41 and 42 operate independently from each other at different levels of the production line.

Also US 2006/099064 A1 discloses a robotic system for the handling of panels.

When the production requires that the tools accommodate variations from a function to another, or from a workpiece to another, it is known to undock a given tool from the articulated arm, and then to dock another one on the arm, by means of tool changers. However, such solution is expensive, slow, and prone to fail, which means that it requires additional services and maintenance.

To avoid such tool changes, it is also known to have as many arm-tool pairs as functions to be performed and workpieces to be operated, and then to switch from a pair to another. However, the drawback of this solution is that it increases both the overall cost of the assembling device, and the floor space needed to host so many arm-tool pairs and change them during production.

Another alternative is to use telescopic structures and/or actuators in order to change the size of a given EOAT. However, these additional components have the inconvenient of decreasing the reliability of the assembling device, which is thus more prone to fail. These components will thus require more complex control means, which leads to an increased complexity of the assembling device.

In any case, the known tools are only intended to operate wooden slats, while other type of elements - notably, insulation panels - need to be operated separately by proper operating tools, which adds even more complexity and floor space.

In all those known solutions, the operating tools are not designed to handle wooden slats of any length, notably very short slats (length inferior to 1 meter) and very long slats (length of at least 5 meters). Now, it is known that long and very long wooden slats have a certain curvature, which means that their straightness deviates from the nominal end-to-end straightness. If such long slats are assembled on the panel without straightness correction, the resulting panel will not meet the quality requirements. Now, to correct the straightness of long slats before assembling them, an additional tool will be required, which, again, will increase the complexity and the floor space of the assembling machine. In addition, handling long and very long slats may require specific tools, which are large and accordingly expensive.

In case the panel assembly includes a plurality of superimposed layers, all layers including a series of wooden slats, while some of them also include a series of insulation panels (acoustic, thermal, or other), where the wooden slats of each layer are secured to the wooden slats of adjacent layers, none of the existing machines allow to assemble such panel in a satisfying manner.

### Summary of the invention

It is accordingly an object of the present invention to provide a device and a method for assembling a panel including a series of superimposed layers having wooden slats and insulation panels, which is versatile enough to operate different types of slats, including short and long wooden slats, as well as insulation panels, and to perform various tasks, while reducing cost, complexity, and floor space.

To this end, the present invention relates to an assembling device for manufacturing a panel assembly, wherein the panel assembly includes a plurality of wooden slats and insulation panels, each wooden slat having a given length and a given straightness, wherein the assembling device includes at least two tooling systems, wherein each tooling system includes an articulated arm and a multifunctional tool disposed at the end of the articulated arm, and wherein the assembling device further includes a tooling controller communicatively coupled to the tooling systems and programmed to instruct the tooling systems to operate the wooden slats and the insulation panels in order to assemble the panel assembly According to the invention, each tooling system further include (i) wooden slat gripping means configured to grip a wooden slat, and having a centerline, (ii) wooden slat positioning means configured to position the gripped wooden slat at the appropriate place on the panel assembly, (iii) wooden slat securing means configured to secure the positioned wooden slat to at least one other wooden slat, (iv) insulation panel gripping means configured to grip an insulation panel, and (v) insulation panel positioning means configured to position the gripped insulation panel at the appropriate place on the panel assembly. Further according to the invention, the tooling systems are instructed by the tooling controller so that, if the length of a wooden slat exceeds a predetermined threshold, the wooden slat gripping means grip the wooden slat at different parts and move relatively to each other in order to align their centerlines and correct the straightness of the wooden slat.

By providing several types of operating means on each end-of-armtool, the assembling device of the invention is capable of performing a variety of operations, including gripping, positioning and, if need be, securing the slats. This allows limiting the number of tools to be used to manufacture panel assemblies.

In addition, by using at least two end-of-arm tools capable of operating either independently or cooperatively, depending notably on the type and on the size of the slat to be handled, instead of several independent tools, the invention offers more flexibility than prior art. In particular, when it comes to handling long and very long wooden slats, the invention provides a specific operation which allows not only to handle them with a high accuracy and for a reduced cost, but also to correct the straightness of the wooden slat without requiring an additional tool for the sole purpose of such a prior correction.

Overall, with a multi-purpose and modular pair of tooling systems, which include a variety of operating means, and are programmed to handle and assemble all types of slats, the automated assembling of a panel can be improved, while being very compact, cost-effective, and easy to use.

Preferably, in order to correct the straightness of the wooden slats before its assembling, the tooling systems are instructed so that, for the wooden slat whose length exceeds the predetermined threshold, the relative movement of the wooden slat gripping means is made so that a lateral pressure is generated on at least one part of the wooden slat.

Also, for the purpose of this straightness correction, the tooling systems are instructed so that, for the wooden slat whose length exceeds the predetermined threshold, the relative movement of the wooden slat gripping means is made so that the straightness of the wooden slat reaches nominal wooden slat straightness.

Preferably, to accommodate short wooden slats, the tooling systems are instructed so that, if the length of a wooden slat does not exceed a predetermined threshold, the wooden slat is gripped and positioned by the wooden slat gripping means and the wooden slat positioning means of only one tooling system. The invention thus takes benefit from the fact that short wooden slats needs no cooperation between two tooling systems.

Preferably, the predetermined threshold is comprised between 50 and 150 centimeters, preferably between 100 and 130 centimeters, and preferably around 120 centimeters. Such threshold accommodates the size of the tools, thereby keeping the tools too close during operations, and takes into account the fact that the straightness of shorter wooden slats does not deviate from nominal straightness.

In a preferred embodiment, in order to allow a proper securing of wooden slats, the tooling systems are programmed so that a pressure is made, by the wooden slat gripping means and the wooden slat positioning means, on portions of the wooden slat where the wooden slat securing means are intended to secure the wooden slat to the wooden slats of adjacent layers.

In a specific embodiment of the invention, at least one of the wooden slat gripping means (and preferably each of them) includes a gripper.

In a specific embodiment of the invention, at least one of the wooden slat securing means (and preferably each of them) include a series of screwdrivers.

Preferably, to accommodate insulation panels, the tooling systems are instructed so that an insulation panel is gripped and positioned by the insulation panel gripping means and the insulation panel positioning means of only one tooling system. The invention thus takes benefit from the fact that insulation panels needs no cooperation between two tooling systems.

In a preferred embodiment of the invention, at least one of the insulation panel gripping means includes a series of needles designed to penetrate at least partially within and to be ejected from an insulation panel.

Preferably, at least one of the wooden slat positioning means and the insulation panel positioning means (and preferably all of them) includes a linear guide, which allows positioning the gripping means with an improved accuracy, and to help the assembling of the insulation panels between the wooden slats by press fit.

Preferably, the assembling device of the present invention further comprises a holding structure designed to hold the panel assembly as it is operated by the tools. The tools can thus operate the slats and assemble the panel on the holding structure.

The present invention also relates to a method for manufacturing a panel assembly by means of the assembling device according to the present invention. The panel assembly includes a plurality of superimposed layers which include a series of wooden slats, each wooden slat having a given length and a given straightness, at least one of the layers also including a series of insulation panels, the wooden slats of each layer being secured to the wooden slats of adjacent layers. According to the present invention, the method includes a series of layer assembling cycles, each layer assembling cycle consisting of assembling a layer of the panel assembly and comprising the steps of:
- operating an insulation panel with one tooling system, by (i) gripping the insulation panel with insulation panel gripping means, (ii) positioning the insulation panel with insulation panel positioning means between two wooden slats of the same layer, (iii) pressing the insulation panel, and (iv) releasing the insulation panel,
- operating a wooden slat whose length does not exceed a predetermined threshold with one tooling system, by (i) gripping the wooden slat with the wooden slat gripping means, (ii) positioning the wooden slat with wooden slat positioning means on at least one wooden slat of an adjacent layer, (iii) securing the wooden slat together to at least one wooden slat of an adjacent layer with the wooden slat securing means, and (iv) releasing the wooden slat,
- operating a wooden slat whose length exceeds a predetermined threshold with two tooling systems, by (i) gripping different parts of the wooden slat with the wooden slat gripping means, (ii) moving wooden slat gripping means relatively to each other with the wooden slat positioning means of each tool to correct the straightness of the wooden slat, (iii) positioning the wooden slat with wooden slat positioning means of each tool on at least one wooden slat of an adjacent layer, (iv) securing the wooden slat togetherto at least one wooden slat of an adjacent layer with the wooden slat securing means, and (v) releasing the wooden slat.

By operating differently insulation panels, short wooden slats and long wooden slats, by the individual functioning of one tooling system, or by the cooperative functioning of two tooling systems, the present invention provides a more versatile way of assembling a panel.

In a preferred embodiment, to correct the straightness of a long wooden slat, when operating a wooden slat whose length exceeds a predetermined threshold, the relative movement of the wooden slat gripping means is made so that a lateral pressure is generated on at least one part of the wooden slat, and so that the straightness of the wooden slat reaches a nominal wooden slat straightness.

The present invention also relates to a panel assembly manufactured by the method of the present invention.

It is another object of the invention to provide an assembling device for manufacturing a panel assembly, the assembling device comprising a plurality of tooling systems, each tooling system comprising an articulated arm and a multifunctional tool disposed at an end of the articulated arm, such that the plurality of tooling systems comprise a plurality of multifunctional tools, wherein the plurality of multifunctional tools comprise one or more of each of:
- a slat gripping element configured to grip a wooden slat of a panel assembly along a centerline disposed between opposite ends of the slat gripping element;
- a slat positioning element configured to position the wooden slat within the panel assembly;
- a slat securing element configured to secure the wooden slat to at least one other wooden slat of an adjacent layer of the panel assembly;
- an insulation gripping element configured to grip an insulation panel; and
- an insulation positioning element configured to position the insulation panel within the panel assembly;
   wherein one or more computing devices communicatively coupled to the plurality of tooling systems, the one or more computing devices storing computer-readable instructions, that, when executed by the one or more computing devices, are configured to cause the plurality of tooling systems to assemble a panel assembly from a plurality of wooden slats and a plurality of insulations panels;
   wherein the computer-readable instructions comprise instructions, that, when executed by the one or more computing devices, cause at least one of the one or more computing devices to transmit instructions to two consecutive slat gripping elements to align their respective centerlines to thereby straighten a curvature of a large-length wooden slat gripped by the two consecutive slat gripping elements based at least in part on a determination that the length of the large-length wooden slat exceeds a predefined length threshold.

According to different embodiments of the invention:
- the alignment of the respective centerlines of the two consecutive slat gripping elements exerts lateral pressure on at least one end of the large-length wooden slat;
- the alignment of the respective centerlines of the two consecutive slat gripping elements results in the large-length wooden slat reaching a nominal straightness;
- the computer-readable instructions comprise instructions, that, when executed by the one or more computing devices, cause at least one of the one or more computing devices to determine that a length of a second wooden slat does not exceed the predefined length threshold, and to transmit instructions for gripping and positioning the second wooden slat to a single tooling system in the plurality of tooling systems, the single tooling system comprising a single gripping element and a single positioning element;
- the predetermined length threshold is between 50 and 150 centimeters, is preferably between 100 and 130 centimeters, and is preferably around 120 centimeters;
- the slat gripping element, the slat positioning element, and the slat securing element are configured to contact the same location on the wooden slat;
- the slat gripping element comprises a gripper;
- the slat securing element comprises one or more screwdrivers;
- the computer-readable instructions comprise instructions, that, when executed by the one or more computing devices, cause at least one of the one or more computing devices to transmit instructions for gripping and positioning an insulation panel to only one tooling system in the plurality of tooling systems;
- the insulation gripping element includes a series of needles configured to penetrate within and to be ejected from an insulation panel; and
- the assembling device further comprises a holding structure configured to hold the panel assembly as it assembled by the plurality of tooling systems.

It is also another of the invention to provide a method for manufacturing a panel assembly, the method comprising:
- storing, by one or more computing devices communicatively coupled to a plurality of tooling systems, an assembly cycle software routine, the assembly cycle software routine comprising an insulation panel subroutine, a wooden slat subroutine, and a large-length wooden slat subroutine; and
- executing, by the one or more computing devices communicatively coupled to a plurality of tooling systems, a plurality of iterations of the assembly cycle software routine to thereby manufacture the panel assembly, wherein each iteration of the assembly cycle software routine executes one or more of the insulation panel subroutine, the wooden slat subroutine, or the large-length wooden slat subroutine;
- wherein execution of the insulation panel subroutine causes the plurality of tool systems to:
   grip, by an insulation gripping element of the plurality of tooling systems, an insulation panel;
   position, by an insulation positioning element of the plurality of tooling systems, the insulation panel between two wooden slat of a single layer of the panel assembly; and
   release, by the insulation gripping element of the plurality of tooling systems, the insulation panel;
- wherein execution of the wooden slat subroutine causes the plurality of tool systems to:
   grip, by a slat gripping element of the plurality of tooling systems, a wooden slat whose length does not exceed a predetermined length threshold ;
   position, by a slat positioning element of the plurality of tooling systems, the wooden slat on at least one wooden slat of an adjacent layer of the panel assembly;
   secure, by a slat securing element of the plurality of tooling systems, the wooden slat to the at least one wooden slat of the adjacent layer; and
   release, by the slat gripping element of the plurality of tooling systems, the wooden slat; and
- wherein execution of the large-length wooden slat subroutine causes the plurality of tool systems to:
   grip, by two slat gripping elements of the plurality of tooling systems, a large-length wooden slat whose length exceeds the predetermined length threshold, wherein each end of the large-length wooden slat is gripped by one of the two slat grippin elements;
   move the two slat gripping elements relative to each other to align the two slat gripping elements and thereby straighten a curvature of the large-length wooden slat;
   position, by two slat positioning elements of the plurality of tooling systems, the large-length wooden slat on at least one wooden slat of an adjacent layer of the panel assembly;
   secure, by two slat securing elements of the plurality of tooling systems, the wooden slat to the at least one wooden slat of the adjacent layer; and release, by the two slat gripping elements of the plurality of tooling systems, the large-length wooden slat.

In a preferred embodiment, the alignment of the two slat gripping elements results in the large-length wooden slat reaching a nominal straightness.

### Brief description of drawings

Other features and advantages of the invention will become apparent from the following description of embodiments of the invention, given below for illustrative purposes, by reference to the annexed drawings.
- FIG. 1 is a perspective view of a known construction system.
- FIG. 2A is a perspective view of a known panel assembly (with only wooden slats, i.e. without insulation panels).
- FIG. 2B is a perspective view of a known panel assembly (with both wooden slats and insulation panels).
- FIG. 3 is a perspective view of an assembling device of the invention.
- FIG. 4-6 are perspective views of a tooling system of the invention.
- FIG. 7-10 are perspective views of a tooling system of the invention during the operation of a short wooden slat.
- FIG. 11-15 are perspective views of a tooling system of the invention during the operation of an insulation panel.
- FIG. 16 is a perspective view of an assembling device of the invention where the two tooling systems grip a non-straight wooden slat.
- FIG. 17 is a perspective view of two tooling systems of the invention during the operation of a long wooden slat.

### Detailed description of the invention

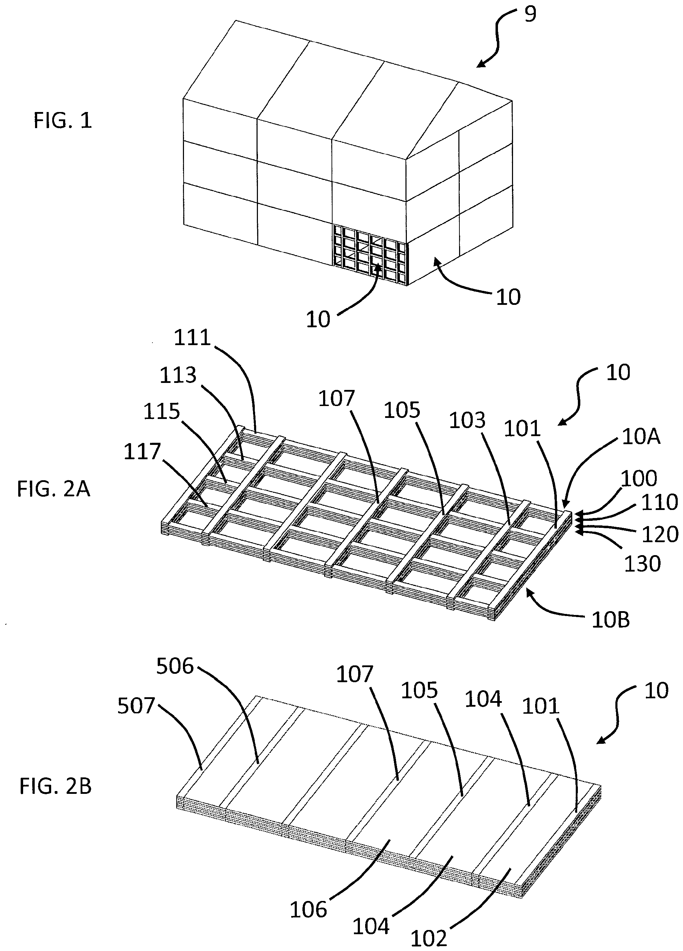

The goal of the assembling device according to the present invention is to manufacture a series of panel assemblies, which will then be assembled to obtain a construction system, an example of which is given on FIG. 1. A construction system 9, such as a house or a building, is typically made of several wooden panels secured to each other. The panels of a given construction system can be identical or different, depending on the required characteristics, notably all the structural requirements of construction systems. The division of the construction system 9 into a set of panels 10 is made according to a rationale, including the size of the panels to be transported on site, and the unity of the system.

The assembling device of the present invention is particularly suited for the manufacturing of the panel assembly 10 as depicted on FIG. 2A and 2B. The panel assembly 10 includes a plurality of superimposed layers, eight layers on FIG. 2A and 2B, the first four layers being referenced 100, 110, 120, and 130. The first layer 100 is considered to be on the upper part 10A of the panel assembly, while the eight layer is on the lower part 10B. The first layer 100 includes a series of wooden slats, seven slats on FIG. 2A, the four first of which are referenced 101, 103, 105 and 107. The wooden slats fulfil a structural function. They are parallel to each other, and they are evenly distributed along the layer 100, with extreme slats (such as slat 101) at the extremity of the layer 100, and intermediate slats (such as slats 103, 105 and 107) between them, at equal distance from each other.

The second layer 110 also includes five wooden slats, the first four of which are referenced 111, 113, 115 and 117, with a similar distribution, except that the wooden slats of the second layer are orthogonal to the wooden slats of the first layer. More generally, the wooden slats of each layer (for instance, layer 110) are parallel to each other, but are orthogonal to the wooden slats of the adjacent layers (for instance, layers 100 and 120). The layers are thus "crossed", and the panel assembly 10 is well known in the art as a "Cross-Laminated Timber" or "CLT'.

The wooden slats 101, 103, 105, 107 of the first layer 100 may be secured to the wooden slats 111, 113, 115, 117 of the second layer by a series of screws or any other solid securing means, like nails, even though screws are preferred. A set of four screws may be used at the contact zone between two slats of adjacent layers, in order to go through those slats and to secure them to each other. For instance, four screws may be put through the contact zone between slats 101 and 111, but also through the contact zone between slats 101 and 113, slats 101 and 115, and slats 101 and 117. The same applies to the slats of all the other layers, so that the wooden slats of each layer can be secured to the wooden slats of adjacent layers.

In practice, in the configuration of FIG. 2A, the contact zone of the first slats of each successive layers are superimposed. Securing the layers to each other is made on a layer-by-layer basis, i.e. the first layer is first positioned, then the wooden slats of the second layer are positioned and secured to the wooden slats of the first layer, by means of screws. Then the wooden slats of the third layer are positioned and secured to the wooden slats of the first layer, by means of screws, which are offset with respect to the screws used to secure the first and second layers.

The wooden slats may have different sizes and shapes, as long as some of them have an elongated shape, which is where an aspect of the present invention will apply. The height and width of those wooden slats is usually around a few centimeters. The length may vary along a wider range, from less than 1 meter (which will be considered as short slats), to 3 meters (long slats), and even more than 5 or 6 meters (very long slats).

The wooden slats also have a given straightness, which corresponds to the deviation between the actual direction of the wooden, regarding a nominal direction which is usually a straight line. In other words, the straightness of a wood represents the fact that it is shaped or not as a straight line. The more the wood is shaped has a straight line, the less it deviates from its nominal straightness. Such deviation is also known in the art as "wood warping". It may stem from stresses, uneven shrinkage, or uneven moisture. It may depend on multiple factors, such as wood species, grain orientation, air flow, sunlight, uneven finishing, or temperature.

Since the panel assemblies should be made of a series of straight wooden slats, the fact that some of the wooden slats are not straight enough is detrimental to the overall performance of the panel assembly. To overcome this straightness defect, either the slat is rejected (but this is not cost-efficient), or it is corrected before being assembled (but it may require additional tools).

Between the wooden slats of the layers, insulation panels are interleaved. On FIG. 2B, since the first layer includes seven wooden slats, six insulation panels can be positioned, the three first of which are referenced 102, 104 and 106. Each insulation panel is interleaved between two wooden slats, for instance the insulation panel 102 is interleaved between wooden slats 101 and 103. The insulation panels fulfil a function of insulating the panel, from an acoustic and/or thermal perspective . They may be interleaved between all wooden slats, or between only some of them, depending on the required insulating performance. By doing so, the insulation panel can be trapped between two consecutive wooden slats of the same layer, on one hand, and between the orthogonal wooden slats of adjacent layers, on the other hand. The length and height of the insulation panels is approximately the same as the one of the wooden slats, while their width may vary, depending on the blank between two consecutive wooden slats within a given layer. Indeed, to perform a proper insulation, it is better to have the insulation panels fill all the space between two consecutive wooden slats.

The panel assembly of FIG. 2A and 2B is given for illustrative purpose. The invention can apply to variations of this panel, as long as it comprises superimposed layers of wooden slats, on the one hand, with at least some insulation panels, on the other hand. For instance, the wooden slats of a given layer may not be parallel to each other, or the wooden slats of adjacent layers may not be orthogonal to each other. Moreover, the number of layers, wooden slats and/or insulation panels may be different, depending on the required application and performance.

In particular, the panel assembly can be "laminated", i.e. the surface of at least some wooden slats may be laminated to provide means to avoid the two adjacent wooden slats will slides relatively to each other at the level of their contact interface. For instance, laminating may consists of providing grooves on the surface of wooden slats: on the front side of a slat of a given layer (for instance, slat 101), and on the back side of a slat of an adjacent layer (for instance, slat 111), so that the respective grooves interact with each other and thus prevent any sliding. Other means are suitable to avoid such sliding, for instance gluing the wooden elements with each other, in addition to screwing means that may be used to secure the wooden elements together and secure the successive layers with each other.

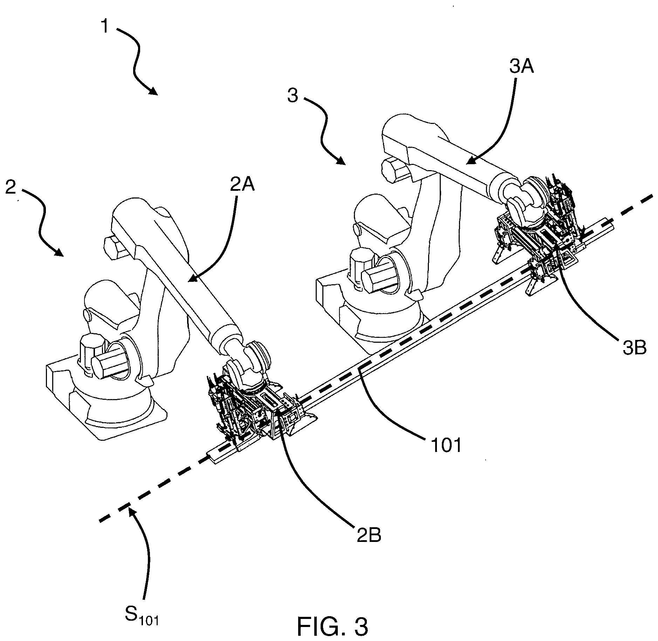

In reference to FIG. 3, in order to manufacture such a panel assembly, the assembling device 1 according to the present invention includes two tooling systems 2, 3, and a holding structure. The holding structure (not visible) is intended to hold the panel assembly during the assembling operations, i.e. to hold the wooden slats and the insulation panels as they are operated by the tooling systems 2, 3. It has the shape of a table, whose size is determined in order to cover the whole panel 10.

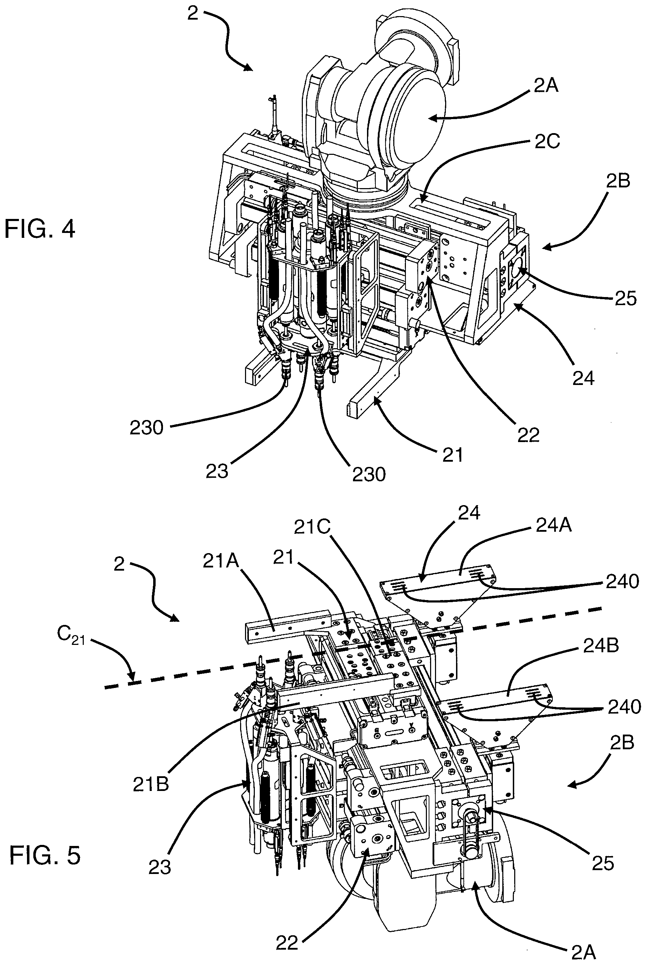

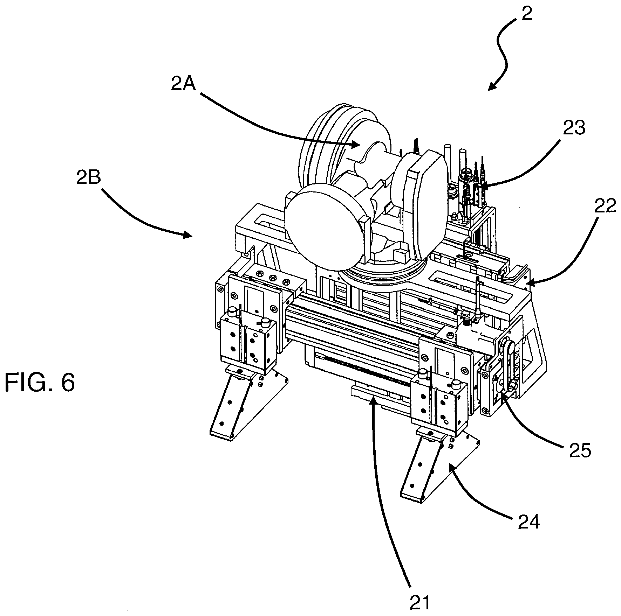

According to the present invention, the assembling device 1 includes at least two tooling systems, while in the example below the assembling device includes two tooling systems 2 and 3. The first tooling system 2 is represented from three different perspectives on FIG. 4, 5 and 6. It includes an articulated arm 2A, and a multifunctional tool 2B. The articulated arm 2A is a known arm, used in production lines. It usually includes a set of wrists, which are moved in order to position the multifunctional tool 2B during the operation. Such an articulated - or robotic - arm is well known in the art, so the skilled person will be able to design and program this arm for the intended purposes.

The multifunctional tool 2B is attached to the end of the arm 2A, and is intended to perform certain operations. Such tool is usually call "end-of-arm tooling" or "EOAT". It usually includes one or several operating means. In order to assemble panel assemblies such as the panel 10, the tool 2A is designed to perform operations on wooden slats and insulation panels, notably gripping, positioning and, if need be, securing the slats. The tool 2B - or EAOT - will thus travel with the arm motion.

According to the present invention, the tool 2B includes five operating means 21 to 25. All these operating means are attached to a framework 20, which is in turn attached to the end of the articulated arm 2A. With this variety of operating means, the assembling device has the capability to operate both wooden slats and insulation panels, without needs to shift to another tooling system. It is thus more flexible.

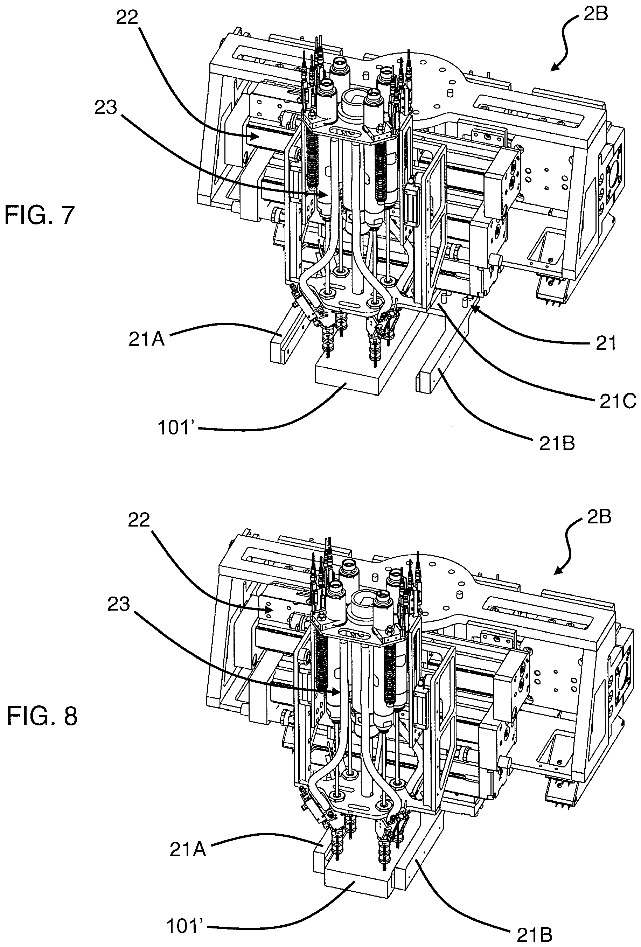

The structure of the tool 2B is shown on FIG. 7, 8, 9 and 10, with respect to the gripping or releasing of wooden slat 101. The tool includes, on one side, means to operate wooden slats and, on the other side, means to operate insulation panels.

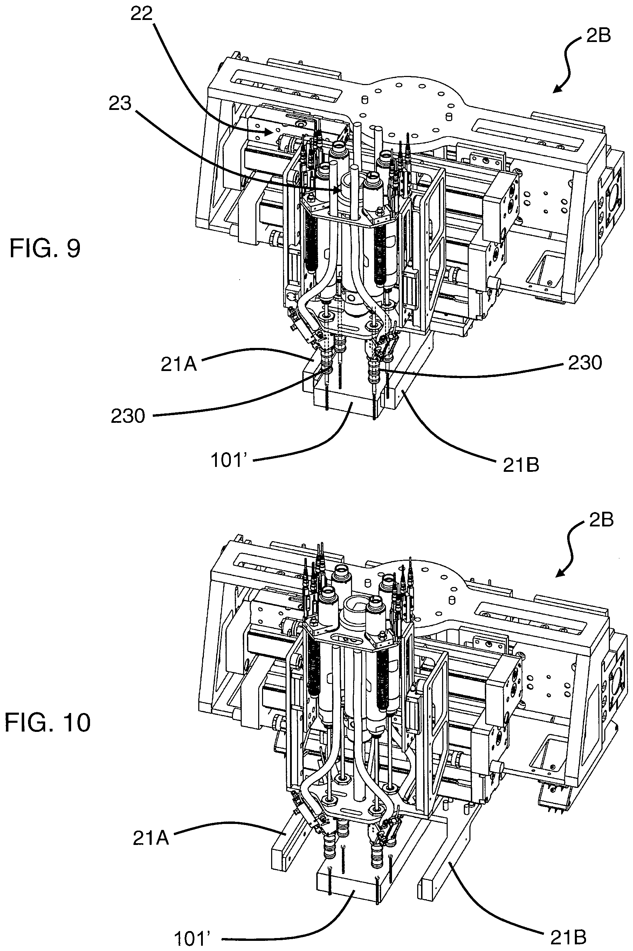

In details, the tool 2B first includes wooden slat gripping means 21 intended to pick a wooden slat, by gripping (or trapping) it (here, "picking" and "gripping" are used to refer to the same operation). In this example, the wooden slat gripping means 21 is a mechanical gripper, which includes two fingers 21A, 21B parallel to each other and bound by an actuator 21C, for instance a pneumatic actuator, which can approach or distance the fingers from each other. The gripping means can grip and pick a wooden slat by getting its fingers closer (see FIG. 7 and 8), and it can release a wooden slat by getting its fingers far from each other (see FIG. 9 and 10), after it has been secured to a wooden slat of an adjacent layer.

The wooden slat gripping means 21 have a centerline C₂₁. In the example of fingers 21A, 21B, the centerline corresponds to the line located at the middle of the fingers and parallel to the fingers (visible on FIG. 5).

The tool 2B also includes wooden slat positioning means, whose function is to position a gripped wooden slat at the appropriate place on the panel assembly 10, before it will be secured to other wooden slats. In this example, this function is attributed to the arm 2A, as the traveling of the arm 2A will move the whole tooling system - and thus the gripping means - at the appropriate position.

The tool 2B also includes wooden slat securing means 23, whose function is to secure the positioned wooden slat to at least one wooden slat of an adjacent layer (for instance, to secure slat 101 to slat 111). To this end, the wooden slat securing means 23 include a series of screwdrivers 230. In this example, four screwdrivers are provided, so slats 101 and 111 will be secured to each other, at their contact zone, by means of four evenly distributed screws that are injected simultaneously by the four screwdrivers 230. The screwdrivers may be controlled by an electronic controller, and actuated by a pneumatic head in order to achieve top and down movements.

To position the screwdrivers right above the wooden slate screwing position, the tool 2B also includes a linear guide 22, to which the wooden slat securing means 23 are attached, and which is pneumatically actuated, so that the securing means 23 can be travelled from left to right. This linear guide, optional, is particularly interesting when the gripping means are designed to grip several contiguous wooden slats at the same time (for instance, two contiguous wooden slats), so the screwdrivers should be travelled on one slat or another.

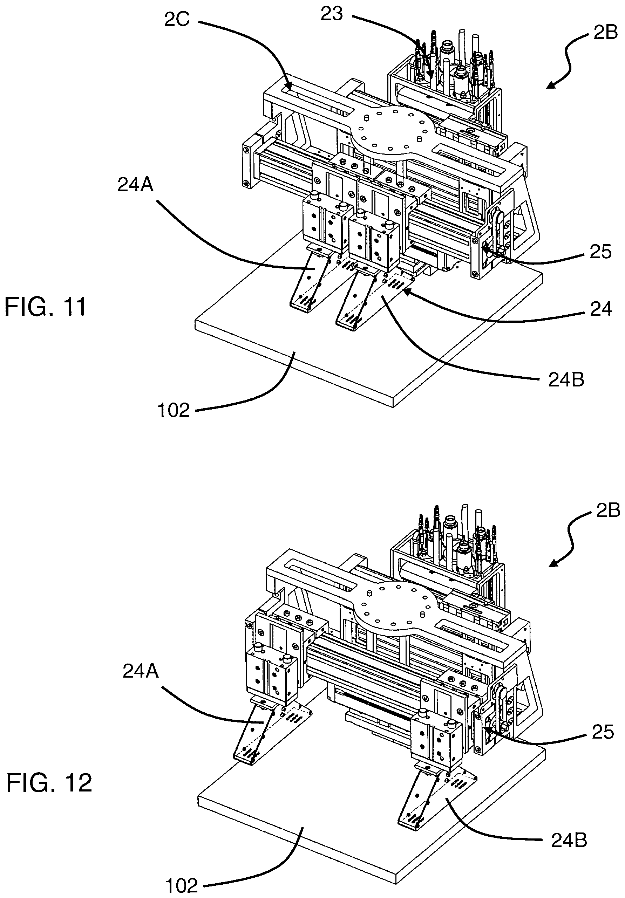

On the other side of the tool, means to operate insulation panels are provided, also be reference to FIG. 11, 12, 13, 14 and 15, with respect to the gripping and the releasing of insulation panel 102. In this regard, the tool essentially includes insulation panel gripping means 24, which are intended to grip insulation panel 102. In this example, the gripping means include needles 240 designed to penetrate at least partially within insulation panel 102 (to grip it) and to be ejected from insulation panel 102 (to release it). It is noticed that for safety reasons, the needles are preferably designed to penetrate within the insulation panel without sticking out the other side of the insulation panel (their strokes being less than the panel thinkness). The needles are distributed on two arms 24A, 24B. The arms 21A, 24B are pneumatically actuated in orderto be moved up and down, while the needles 240 can be ejected ("in") to grip the insulation panel and retracted to release the insulation panel ("out").

The arms 24A, 24B can grip two different parts of the insulation panel 102. It is better that the arms 24A, 24B be positioned around the extremity of the width of the insulation panel 102, to ensure not only a satisfying gripping but also a good press fit of the insulation panel between two wooden slats. To do so, the distance between arms 24A, 24B may be controlled. To this end, the tool 2B includes a linear guide 25, to which the insulation panel gripping means 24 are attached, and on which the arms 24A, 24B can slide on left and right in order to be properly positioned. This linear guide, optional, is particularly interesting in order to improve the positioning of the gripping means 24 before they indeed grip the insulation panel.

Finally, the tool 2B also includes insulation panel positioning means 25, whose function is to position a gripped insulation panel at the appropriate place on the panel assembly 10. In this example, again, this function is attributed to the arm 2A, as the traveling of the arm 2A will move the gripping means.

The insulation panels are intended to be inserted between slats by means of "press fitting", i.e. by pressing a panel between two slats with the tooling system 2 as the panel is gripped by needle grippers 24A and 24B, so the panel will hold without falling down and without the need to secure it with staples. To do so, considering for instance the insulation panel 106, the dimensional clearances between the width of the insulation panel 106 and the inneredges of wooden slats 105 and 107 (that were assembled and secured to the panel assembly by the same tooling system 2) must be tighter than usual. The actual quantification of those dimensional clearances may be performed during the development of the panel assembly.

Other operating means may be added to the tool 2B to add more flexibility to the overall assembling device 1. However, it will be appreciated that when the panel assembly consists of a superimposition of several layers, with series of wooden slats and insulation panels, the above-described operating means may be sufficient to allow performing all the necessary operations on the slats.

The wooden slat operating means 21, 22, 23 are disposed on one side of the tool 2A, while the insulation panel operating means 24, 25 are disposed on the other side, with regard to the framework 20. With this configuration, the tooling system 2 can easily shift from a wooden slat operation to an insulation panel operation, by a simple rotation of the tool 2B around the end of the arm 2A. In practice, when the tool is operating a wooden slat, the wooden slat operating means 21, 22, 23 are oriented on the proper side, while the insulation panel operating means 24, 25 are made inactive. Then, when the tool needs to operate an insulation panel, the arm 2A provides a 180-degree rotation of the tool 2B, so the insulation panel operating means 24, 25 are oriented on the proper side, while the wooden slat operating means 21, 22, 23 are made inactive. Whereas other distributions of the operating means on the tool 2B may be contemplated, the configuration of FIG. 4, 5 and 6 provides a fast and efficient way to operate successively on wooden slats and insulation panels. This thus gives a high flexibility in terms of assembling strategy, for instance regarding the orientation of the different elements of the panel assembly (be it wooden slats or insulation panels).

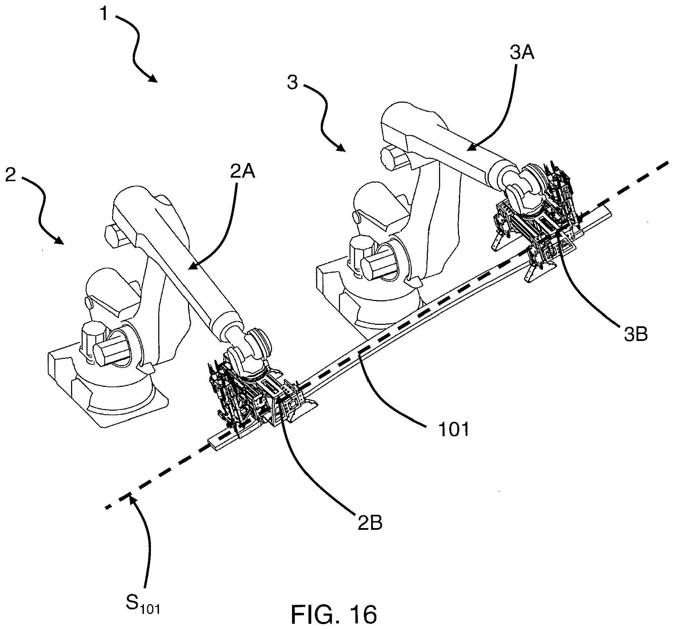

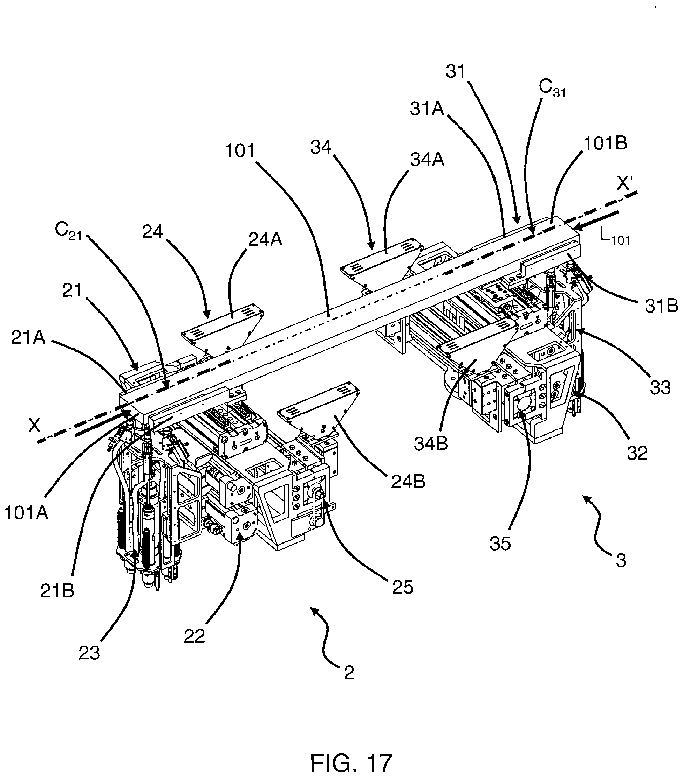

The second tooling system 3, visible on FIG. 16 and 17, has a structure similar as the one of the first tooling system 2 of FIG. 4, 5 and 6. The pair of tooling systems 2, 3 is thus "twin" tooling systems, which can be interchanged and perform the very same operations. Depending on the necessary operations, and on the contemplated panel assembly, the skilled person may design the second tooling system differently. The skilled person may also add other tooling systems, although a major advantage of the present invention is that it requires less tools than what was known in the art in order to manufacture this type of panel assembly. It will thus be appreciated that limiting the number of tooling systems is particularly advantageous, and that a pair of two tooling systems may be sufficient to perform all the necessary operations.

According to the present invention, the tooling systems 2, 3 are instructed by a computing program (or tooling controller) to perform different types of operations, depending on the elements to be operated. In particular, the tooling controller will instruct the tooling systems to accommodate three types of slats: insulation panels, "short" wooden slats, and "long" wooden slats. In the following description of the invention, any reference to "short" or "long" wooden slats will be made by comparison with a length threshold L, which will be discussed below.

The assembling device of the invention may be a part of a production line. In an example, the wooden slats and the insulation panels come from other machines located upstream in the production line. The elements may be tagged and uniquely identified by means of QR codes, and are tracked throughout the manufacturing process from raw material to finished slats of panels. A quality control of the elements may be performed on the production line before they reach the assembling device of the invention, so only valid elements will flow through the assembling process. At the entry of the assembling device, a QR code reader may read the QR code of each of the elements and inform the tooling systems on the slat or panel at hand. A sanity check may then be performed in order to verify that this element is indeed the next element that the tooling systems were expected to manipulate on the panel which is being currently assembled, and they can then perform the assembling of the element on the panel assembly. In this example, the length of the slat is simply read through the QR code, in connection with the tooling controller which was programed upfront and which stores the length of each referenced slat of the panel assembly.

For insulation panels, such as slat 102, as shown on FIG. 11, 12, 13, 14 and 15, only one tooling system is necessary. This means that slat 102 can be gripped and positioned by the insulation panel gripping means (the arms 24A, 24B and needles 240) and the insulation panel positioning means (the articulated arm 2A) of only one tooling system (the tooling system 2 in this example).

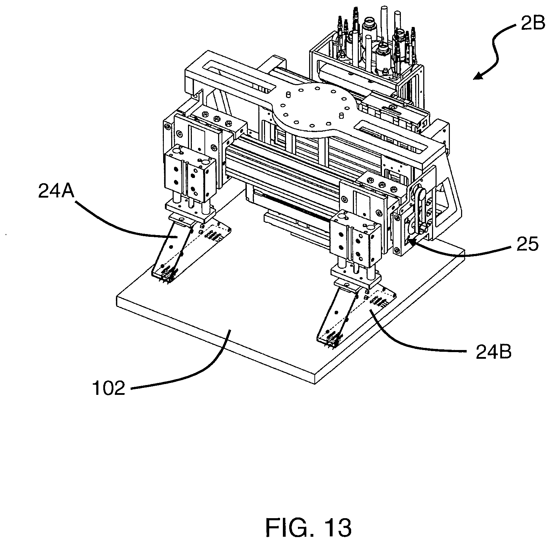

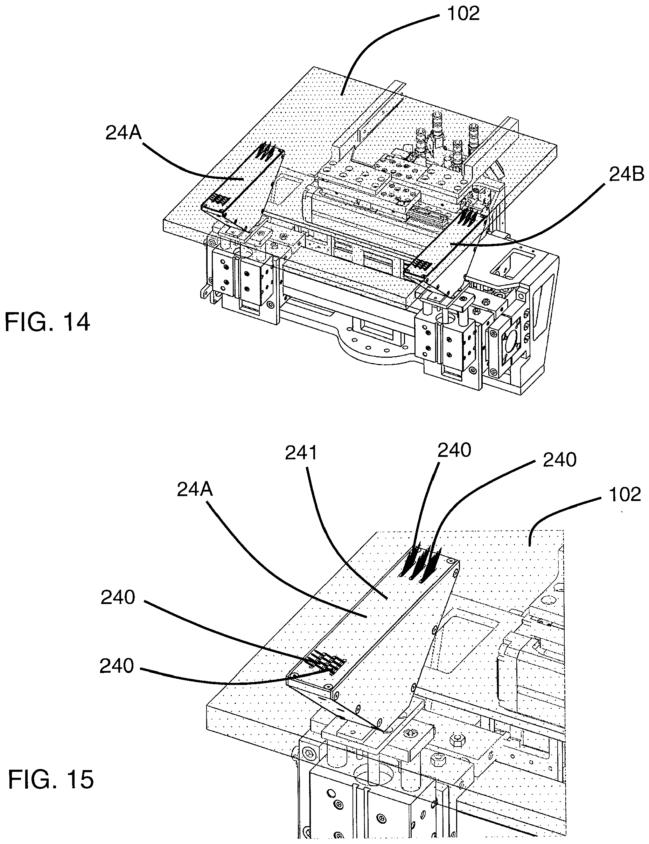

The following operations may thus performed by the tooling system 2 (or by the tooling system 3 if need be):
- First step: gripping insulation panel 102 with insulation panel gripping means 24. From an initial position (FIG. 12), the arms 24A, 24B are moved downwards (FIG. 13), and the needles are ejected to penetrate slat 102 (details on FIG. 14 and 15). Then the arms are moved upwards and the slat is moved along with the arms.
- Second step: positioning insulation panel 102 with insulation panel gripping means 2A between two wooden slats 101 and 103 of the same layer 100. The articulated arm 2A moves in order to position slat 102 between wooden slats 101 and 103; slat 102 will then be "trapped" between wooden slats 101, 103, on the one hand, and wooden slats 111, 113, 115, 117 of layer 110, on the other hand.
- Third step: pressing the insulation panel. The arms are moved downwards, until it fits on between wooden slats 101, 103 of the same layer, and on wooden slats 111, 113, 115, 117 of adjacent layer. The shape of the arms 24A, 24B, with an elongated lower surface 241, provides a sufficient lower surface that will press on the insulation panel.
- Fourth step: releasing the insulation panel. The needles 240 are retracted, and the arms 24A, 24B are moved upwards.

In the example of FIG. 11-15, before the first step, the distance between the arms 24A and 24B is set by the linear guide 25. From an initial distance between the arms (FIG. 11), the arms slide along the linear guide until they reach an appropriate distance (FIG. 12), which can be considered as reached when the arms are located around the extremities of the length of panel 102 (but the arms can also be positioned in order to grip other parts of panel 102).

For "short" wooden slats, such as the slat 101' visible on FIG. 7, 8, 9 and 10, again, only one tooling system is necessary. This means that slat 101' can be gripped and positioned by the wooden slat gripping means (the fingers 21A, 21B) and the wooden slat positioning means (the articulated arm 2A) of only one tooling system (the tooling system 2 in this example).

The following operations may thus performed by the tooling system 2 (or by the tooling system 3 if need be):
- First step: gripping the wooden slat 101' with the wooden slat gripping means 21. The gripping means are positioned properly so that the slat 101' is between the two fingers 21A, 21B (FIG. 7), then the fingers get closer until they grip the slat (FIG. 8). The slat 101' is gripped.
- Second step: positioning the wooden slat 101', with the wooden slat positioning means 2A, on slats 111, 113, 115, 117 of adjacent layer 110. The articulated arm 2A moves in order to position slat 101' on slats 111, 113, 115, 117.
- Third step: securing the wooden slat 101' together to slat 111 of adjacent layer 110, with the wooden slat securing means 23. The screwdrivers are laterally positioned by the linear guide 22 (if need be), then the screwdriver heads are moved downwards so the screwdrivers 240 can operate the securing of the slat 101' to slat 111, at the contact zone of slats 101' and 111 (FIG. 9).
- Fourth step: releasing the wooden slat 101'. Once the screwing is finished, the screwdrivers are moved upwards, and the fingers 21A, 21B are distanced from each other, so the slat 101' is released (FIG. 10).

If the slat 101' must be secured to other slats such as slats 113, 115, 117, the arm 2A will move in order to locate the screwdrivers 230 on the contact zone of slat 101' and any other slat, and then actuate the screwing.

For "long" wooden slats, such as the slat 101 visible on FIG. 2A, and then on FIG. 17, this time, according to the invention, the two tooling systems are cooperatively operated, not only in orderto grip, position and secure the slat, but also in order to correct the slat straightness before it is secured.

To differentiate "short" and "long" wooden slats, a predetermined threshold L is set. Wooden slats whose length do not exceed this threshold (such as slat 101') are considered as "short", while wooden slats whose length exceeds this threshold (such as slat 101) are considered as "long". A relevant threshold may be between 50 and 150 centimeters, preferably between 100 and 130 centimeters, and preferably around 120 centimeters. This threshold is determined in orderto accommodate the size of the tooling systems (too short slats cannot be gripped by two tooling systems), and takes into account the fact that the straightness of "short" wooden slats does not deviate much from nominal straightness.

For such "long" wooden slats, whose length L₁₀₁ exceeds threshold L, the straightness S₁₀₁ may deviate from nominal straightness S (i.e. from a straight line). The tooling systems 2, 3 are instructed to correct this straightness. To do so, two parts of the wooden slat (in this example, the extremities 101A and 101B) are gripped by the wooden slat gripping means 21 and 31, respectively. As mentioned above, the wooden slat gripping means 21 and 31 have centerlines C₂₁ and C₃₁, respectively. As the straightness S₁₀₁ of slat 101 may not be a straight line, when the wooden slat gripping means 21 and 31 grip the slat 101, their respective centerlines C₂₁ and C₃₁ may not be aligned.

To correct this straightness, the wooden slat gripping means 21 and 31 are moved relatively to each other, here by means of the arms 2A and 3B, respectively, in order to align their centerlines C₂₁ and C₃₁. By doing so, the two gripped parts of the wooden slats (in this example, the extremities of the slat 101A and 101B) are moved relatively to each other. This relative movement can be achieved by moving both gripping means, or only one (for instance, 21) relatively to the other. This relative moment generates a lateral pressure on different parts of the slat (or on one part, relatively to the other). When the centerlines are indeed aligned, for instance along axis X-X' on FIG. 17, then the straightness S₁₀₁ of the wooden slat 101 is corrected, in order to get close to - or preferably to reach - the nominal straightness S of such wooden slat.

The following operations may thus performed by the tooling systems 2, 3:
- First step: gripping different parts of wooden slat 101A, 101B with the wooden slat gripping means of each tool 21, 31, respectively. Again, the two fingers of the gripping means are properly positioned, and then approached to grip the slat.
- Second step: moving the wooden slat gripping means 21, 31 relatively to each other, with the wooden slat positioning means (the arms 2A and 3A), to correct the straightness of the wooden slat S₁₀₁. As mentioned above, the centerlines of the gripping means C₂₁ and C₃₁ are aligned.
- Third step: positioning the wooden slat, with the wooden slat positioning means (the arms 2A and 3A), on wooden slat 111 of adjacent layer 110.
- Fourth step: securing wooden slat 101 together to wooden slats 111 and 117 of adjacent layer 110, with the wooden slat securing means 23 and 33. In details, slat 101 is secured to slat 111 at one part (in this example, extremity 101A), by screwdrivers 230, while slat 101 is secured to slat 117 at another part (in this example, extremity 101B), by screwdrivers 230. The screwdrivers 230 of the first tooling system 2 are laterally positioned by the linear guide 22 (if need be), the screwdriver heads are moved downwards so the screwdrivers 240 can operate the securing of the slat 101 to slat 111, at the contact zone of slats 101 and 111 . Similarly, The screwdrivers 330 of the second tooling system 3 are laterally positioned by the linear guide 32 (if need be), the screwdriver heads are moved downwards so the screwdrivers 340 can operate the securing of the slat 101 to slat 117, at the contact zone of slats 101 and 117.
- Fifth step: releasing the wooden slat. Once the screwing is over, the screwdrivers 230 and 330 are moved upwards, and the fingers 21A, 21B, 31A, 31B are distanced from each other, so the slat 101 is released.

Again, if the slat 101' must be secured to other slats such as slats 113, 115, 117, the arms 2A and 3A will move in order to locate the screwdrivers 230 and 330 on the contact zone of slat 101 and any other slat, and then actuate the screwing.

For each type of slat, it is preferable that the tooling systems operate on the portion of the slat where it will be pressed or secured within the panel assembly. This means that, for the insulation panels, the gripping takes place in the zone where the pressure will later be made (just before the releasing of the slat). For the wooden slats, this means that the zone where the gripping means and the securing means operate is the contact zone between the wooden slat and the other wooden slat to which it is supposed to be secured (for instance, the contact zone between slats 101 and 111 in the example above).

The overall assembling process may be programmed and performed upon a panel plan, wherein the types, lengths, positions, etc. of the slats are mentioned. The tooling systems thus knowwhat type of slat they operate, and accordingly what type of assembling steps they have to perform.

The manufacturing process can be made on a layer-by-layer basis, i.e. one layer at the time, starting from the eight layer to the first (or inversely, from the first layerto the last). In this case, the process may include a series of layer assembling cycles, each layer assembling cycle consisting of assembling one layer of the panel assembly, on a slat-by-slat basis, thereby applying the steps above depending on the type of slat considered.

## Claims

1. An assembling device (1) for manufacturing a panel assembly (10),
- wherein the panel assembly (10) includes a plurality of wooden slats (101, 103, 105... 111, 113, 115...) and insulation panels (102, 104, 106...), each wooden slat having a given length (L₁₀₁) and a given straightness (S₁₀₁),
- wherein the assembling device (1) includes at least two tooling systems (2, 3), wherein each tooling system includes an articulated arm (2A, 3A) and a multifunctional tool (2B, 3B) disposed at the end of the articulated arm, and wherein the assembling device further includes a tooling controller communicatively coupled to the tooling systems (2, 3) and programmed to instruct the tooling systems (2, 3) to operate the wooden slats (101, 103... ) and the insulation panels (102, 104...) in order to assemble the panel assembly (10),
**characterized in that** each tooling system (2, 3) further include:
- wooden slat gripping means (21, 31) configured to grip a wooden slat (101), and having a centerline (C₂₁, C₃₁),
- wooden slat positioning means (2A, 3A) configured to position the gripped wooden slat (101) at the appropriate place on the panel assembly (10),
- wooden slat securing means (23, 33) configured to secure the positioned wooden slat (101) to at least one other wooden slat (111),
- insulation panel gripping means (24, 34) configured to grip an insulation panel (102),
- insulation panel positioning means (2A, 3A) configured to position the gripped insulation panel (102) at the appropriate place on the panel assembly (10),
**and in that** the tooling systems (2, 3) are instructed by the tooling controller so that, if the length of a wooden slat (L₁₀₁) exceeds a predetermined threshold (L), the wooden slat gripping means (21, 31) grip the wooden slat at different parts (101A, 101B) and move relatively to each other in order to align their centerlines (C₂₁, C₃₁) and correct the straightness of the wooden slat (S₁₀₁).

2. The assembling device of claim 1, wherein, if the length of a wooden slat (L₁₀₁) exceeds a predetermined threshold (L), the relative movement of the wooden slat gripping means (21, 31) is made so that a lateral pressure is generated on at least one part of the wooden slat (101A).

3. The assembling device of claim 1 or 2, wherein, if the length of a wooden slat (L₁₀₁) exceeds a predetermined threshold (L), the relative movement of the wooden slat gripping means (21, 31) is made so that the straightness of the wooden slat (S₁₀₁) reaches nominal wooden slat straightness (S).

4. The assembling device of any of the preceding claims, wherein, if the length of a wooden slat (L₁₀₁) does not exceed a predetermined threshold (L), the wooden slat is gripped and positioned by the wooden slat gripping means and the wooden slat positioning means of only one tooling system (2).

5. The assembling device of any of the preceding claims, wherein the predetermined threshold (L) is comprised between 50 and 150 centimeters, is preferably between 100 and 130 centimeters, and is preferably around 120 centimeters.

6. The assembling device of any of the preceding claims, wherein the tooling systems (2, 3) are instructed so that a pressure is made, by the wooden slat gripping means (21, 31) and the wooden slat positioning means (2A, 3A), on portions of the wooden slat (101C) where the wooden slat securing means (23, 33) are intended to secure the wooden slat (101) to the wooden slats of adjacent layers (111).

7. The assembling device of any of the preceding claims, wherein at least one of the wooden slat gripping means (21, 31) includes a gripper (210, 310).

8. The assembling device of any of the preceding claims, wherein at least one of the wooden slat securing means (23, 33) include a series of screwdrivers (230).

9. The assembling device of any of the preceding claims, wherein the tooling systems (2, 3) are instructed by the tooling controller so that an insulation panel (102) is gripped and positioned by the insulation panel gripping means and the insulation panel positioning means of only one tooling system (2).

10. The assembling device of any of the preceding claims, wherein at least one of the insulation panel gripping means (24, 34) includes a series of needles (240, 340) designed to penetrate at least partially within and to be ejected from an insulation panel.

11. The assembling device of any of the preceding claims, further comprising a holding structure (4) designed to hold the panel assembly (10) as it is operated by the tools (2, 3).

12. A method for manufacturing a panel assembly (10) by means of the assembling device (1) of any of the preceding claims, wherein the panel assembly (10) includes a plurality of superimposed layers (100, 110, 120...) which include a series of wooden slats (101, 103, 105... 111, 113, 115...) each wooden slat having a given length (L₁₀₁) and a given straightness (S₁₀₁), at least one of the layers also including a series of insulation panels (102, 104, 106...), the wooden slats of each layer (101, 103, 105...) being secured to the wooden slats of adjacent layers (111, 113, 115...), **characterized in that** the method includes a series of layer assembling cycles, each layer assembling cycle consisting of assembling a layer of the panel assembly (100, 110...) and comprising the steps of:
- operating an insulation panel (102) with one tooling system (2), by:
o gripping the insulation panel with insulation panel gripping means (24),
o positioning the insulation panel with insulation panel positioning means (25) between two wooden slats of the same layer (101, 103),
o pressing the insulation panel, and
o releasing the insulation panel,
- operating a wooden slat whose length does not exceed a predetermined threshold (L) with one tooling system (2), by:
o gripping the wooden slat with the wooden slat gripping means (21),
o positioning the wooden slat with wooden slat positioning means (2A) on at least one wooden slat of an adjacent layer,
o securing the wooden slat together to at least one wooden slat of an adjacent layer with the wooden slat securing means (23), and
o releasing the wooden slat,
- operating a wooden slat (101) whose length (L₁₀₁) exceeds a predetermined threshold (L) with two tooling systems (2, 3), by:
o gripping different parts of the wooden slat (101A, 101B) with the wooden slat gripping means of each tool (21, 31),
o moving wooden slat gripping means (21, 31) relatively to each other with the wooden slat positioning means of each tool (2A, 3A) to correct the straightness of the wooden slat (S₁₀₁),
o positioning the wooden slat with wooden slat positioning means of each tool (22, 24) on at least one wooden slat of an adjacent layer (111),
o securing the wooden slat together to at least one wooden slat of an adjacent layer (111) with the wooden slat securing means (23), and
o releasing the wooden slat.

13. The method of claim 12, wherein when operating a wooden slat (101) whose length (L₁₀₁) exceeds a predetermined threshold (L), the relative movement of the wooden slat gripping means (21, 31) is made so that a lateral pressure is generated on at least one part of the wooden slat (101A), and so that the straightness of the wooden slat (S₁₀₁) reaches a nominal wooden slat straightness (S).

## Patentansprüche

1. Montagevorrichtung (1) zur Herstellung einer Platteneinheit (10),
- wobei die Platteneinheit (10) eine Vielzahl Holzleisten (101, 103, 105, ... 111, 113, 115) und Dämmplatten (102, 104, 106...) umfasst, wobei jede Holzleiste eine vorgegebene Länge (L₁₀₁) und eine vorgegebene Geradheit (S₁₀₁) aufweist,
- wobei die Montagevorrichtung (1) mindesten zwei Werkzeugsysteme (2, 3) umfasst, wobei jedes Werkzeugsystem einen Gelenkarm (2A, 3A) und ein am Ende des Gelenkarms angeordnetes Multifunktionswerkzeug (2B, 3B) umfasst, und wobei die Montagevorrichtung ferner einen Werkzeugkontroller umfasst, der mit den Werkzeugsystemen (2, 3) in Kommunikationsverbindung steht und derart programmiert ist, dass er die Werkzeugsysteme (2, 3) dazu veranlasst, die Holzleisten (101, 103...) und die Dämmplatten (102, 104...) zu bedienen, um die Platteneinheit (10) zusammenzustellen,
**dadurch gekennzeichnet, dass** jedes Werkzeugsystem (2, 3) ferner umfasst:
Mittel (21, 31) zum Greifen von Holzleisten, die derart konfiguriert sind, dass sie eine Holzleiste (101) greifen, und eine Mittellinie (C₂₁, C₃₁) aufweisen,
- Positioniermittel (2A, 3A) für Holzleisten, die derart konfiguriert sind, dass sie die im Griff befindliche Holzleiste (101) an der entsprechenden Stelle der Platteneinrichtung (10) positionieren,
- Befestigungsmittel (23, 33) für Holzleisten, die derart konfiguriert sind, dass sie die positionierte Holzleiste (101) an mindestens einer anderen Holzleiste (111) befestigen,
Greifmittel (24, 34) für Dämmplatten, die derart konfiguriert sind, dass sie eine Dämmplatte (102) greifen,
- Positioniermittel (2A, 3A) für Dämmplatten, die derart konfiguriert sind, dass sie die im Griff befindliche Dämmplatte (102) an der entsprechenden Stelle der Platteneinrichtung (10) positionieren,
**und dass** die Werkzeugsysteme (2, 3) vom Werkzeugkontroller den Befehl erhalten, dass, wenn die Länge einer Holzleiste (L₁₀₁) einen vorgegebenen Schwellenwert (L) übersteigt, die Greifmittel (21, 31) diese an unterschiedlichen Stellen (101A, 101B) greifen und sich relativ zueinander bewegen, um ihre Mittellinien (C₂₁, C₃₁) miteinander auszurichten und die Geradheit der Holzleiste (S₁₀₁) korrigieren sollen.

2. Vorrichtung nach Anspruch 1, wobei, wenn die Länge einer Holzleiste (L₁₀₁) einen vorgegebenen Schwellenwert (L) übersteigt, die relative Bewegung der Greifmittel (21, 31) derart vollzogen wird, dass ein seitlicher Druck auf mindestens einen Teil der Holzleiste (101A) erzeugt wird.

3. Vorrichtung nach Anspruch 1 oder 2, wobei, wenn die Länge einer Holzleiste (L₁₀₁) einen vorgegebenen Schwellenwert (L) übersteigt, die relative Bewegung der Greifmittel (21, 31) derart vollzogen wird, dass die Geradheit der Holzleiste (S₁₀₁) denn Geradheitsnennwert (S) für Holzleisten erreicht.

4. Vorrichtung nach einem der vorstehenden Ansprüche, wobei, wenn die Länge einer Holzleiste (L₁₀₁) einen vorgegebenen Schwellenwert (L) nicht übersteigt, diese von den Holzleistengreifmitteln und -positioniermitteln nur eines Werkzeugsystems (2) gegriffen und positioniert wird.

5. Vorrichtung nach einem der vorstehenden Ansprüche, wobei der vorgegebene Schwellenwert (L) zwischen 50 und 150 cm, insbesondere zwischen 100 und 130 cm liegt und vorzugsweise etwa 120 cm beträgt.

6. Vorrichtung nach einem der vorstehenden Ansprüche, wobei die Werkzeugsysteme (2, 3) den Befehl erhalten, dass von den Greif- (21, 31) und Positioniermitteln (2A, 3A) für Holzleisten ein Druck auf Teile der Holzleiste (101C) zu erzeugen ist, wo die Befestigungsmittel (23, 33) die Holzleiste (101) an den Holzleisten angrenzender Schichten (111) befestigen sollen.

7. Vorrichtung nach einem der vorstehenden Ansprüche, wobei mindestens eines der Greifmittel (21, 31) für Holzleisten einen Greifer (210, 310) umfasst.

8. Vorrichtung nach einem der vorstehenden Ansprüche, wobei mindestens eines der Befestigungsmittel (23, 33) für Holzleisten eine Reihe von Schraubendrehern (230) umfasst.

9. Vorrichtung nach einem der vorstehenden Ansprüche, wobei die Werkzeugsysteme (2, 3) vom Werkzeugkontroller den Befehl erhalten, dass eine Dämmplatte (102) von den Greif- und Positioniermittel für Dämmplatten nur eines Werkzeugsystems (2) zu greifen und positionieren ist.

10. Vorrichtung nach einem der vorstehenden Ansprüche, wobei mindestens eines der Greifmittel (24, 34) für Dämmplatten eine Reihe von Nadeln (240, 340) umfasst, die darauf ausgelegt sind, mindestens teilweise in eine Dämmplatte eindringen und daraus ausgestoßen werden.

11. Vorrichtung nach einem der vorstehenden Ansprüche, ferner umfassend eine Haltestruktur (4), die darauf ausgelegt ist, die Platteneinheit (10) festzuhalten, während diese von den Werkzeugen (2, 3) bearbeitet wird.

12. Verfahren zur Herstellung einer Platteneinheit (10) mittels der Vorrichtung (1) nach einem der vorstehenden Ansprüche, wobei die Platteneinheit (10) eine Vielzahl einander überlagerten Schichten (100, 110, 120 ...) umfasst, die eine Reihe von Holzleisten (101, 103, 105... 111, 113, 115...) umfasst, wobei jede Holzleiste eine vorgegebene Länge (L₁₀₁) und eine vorgegebene Geradheit (S₁₀₁) aufweist, wobei mindestens eine der Schichten auch eine Reihe von Dämmplatten (102, 104, 106...) umfasst, wobei die Holzleisten jeder Schicht (101, 103, 105...) an den Holzleisten angrenzender Schichten (111, 113, 115...) befestigt werden, **dadurch gekennzeichnet, dass** das Verfahren eine Reihe von Schichtmontagezyklen umfasst, wobei jeder Schichtmontagezyklus aus der Montage einer Schicht der Platteneinheit (100, 110...) besteht, und umfassend die Schritte:
- Bedienen einer Dämmplatte (102) mit einem Werkzeugsystem (2) durch:
o Greifen der Dämmplatte mit Greifmitteln (24) für Dämmplatten,
o Positionieren der Dämmplatte mit Positioniermitteln (25) für Dämmplatten zwischen zwei Holzleisten derselben Schicht (101, 103),
o Pressen der Dämmplatte und
o Lösen der Dämmplatte,
- Bedienen einer Holzleiste, deren Länge einen vorgegebenen Schwellenwert (L) nicht übersteigt, mit einem Werkzeugsystem (2) durch:
o Greifen der Holzleiste mit den Greifmitteln (21) für Holzleisten,
o Positionieren der Holzleiste mit Positioniermitteln (2A) für Holzleisten auf mindendestens einer Holzleiste einer angrenzenden Schicht,
o Befestigen der Holzleiste an mindestens einer Holzleiste einer angrenzenden Schicht mit den Befestigungsmitteln (23) für Holzleisten und
o Lösen der Holzleiste,
- Bedienen einer Holzleiste (101), deren Länge (L₁₀₁) einen vorgegebenen Schwellenwert (L) übersteigt, mit zwei Werkzeugsystemen (2, 3) durch:
o Greifen unterschiedlicher Teile der Holzleiste (101A, 101B) mit den Greifmitteln (21, 31) jedes Werkzeugs für Holzleisten,
o Bewegen von Greifmitteln (21, 31) relativ zueinander mit den Positioniermitteln (2A, 3A) jedes Werkzeugs für Holzleisten, um die Geradheit der Holzleiste (S₁₀₁) zu korrigieren,
o Positionieren der Holzleiste mit Positioniermitteln (22, 24) für Holzleisten jedes Werkzeugs auf mindendestens einer Holzleiste einer angrenzenden Schicht (111),
o Befestigen der Holzleiste an mindestens einer Holzleiste einer angrenzenden Schicht (111) mit den Befestigungsmitteln (23) für Holzleisten und
o Lösen der Holzleiste.

13. Verfahren nach Anspruch 12, wobei, bei der Bedienung einer Holzleiste (101), deren Länge (L₁₀₁) einen vorgegebenen Schwellenwert (L) übersteigt, die relative Bewegung der Greifmittel (21, 31) für Holzleisten derart vollzogen wird, dass ein seitlicher Druck auf mindestens einen Teil der Holzleiste (101A) erzeugt wird und dass die Geradheit (S₁₀₁) der Holzleiste einen Geradheitsnennwert (S) für Holzleisten erreicht.

## Revendications

1. Dispositif d'assemblage (1) pour la fabrication d'un ensemble panneau (10),
dans lequel l'ensemble panneau (10) comprend une pluralité de lattes de bois (101, 103, 105 ... 111, 113, 115 ...) et des panneaux d'isolation (102, 104, 106 ...), chaque latte de bois ayant une longueur donnée (L₁₀₁) et une rectitude donnée (S₁₀₁),
dans lequel le dispositif d'assemblage (1) comprend au moins deux systèmes d'outillage (2, 3), dans lequel chaque système d'outillage comprend un bras articulé (2A, 3A) et un outil multifonction (2B, 3B) disposé à l'extrémité du bras articulé, et dans lequel le dispositif d'assemblage comprend en outre un organe de commande d'outillage couplé, par communication, aux systèmes d'outillage (2, 3) et programmé pour donner l'instruction aux systèmes d'outillage (2, 3) d'actionner les lattes de bois (101, 103 ...) et les panneaux d'isolation (102, 104 ...) afin d'assembler l'ensemble panneau (10),
**caractérisé en ce que** chaque système d'outillage (2, 3) comprend en outre :
des moyens de préhension de latte de bois (21, 31) configurés pour saisir une latte de bois (101) et ayant une ligne centrale (C₂₁, C₃₁),
des moyens de positionnement de latte de bois (2A, 3A) configurés pour positionner la latte de bois (101) saisie à l'emplacement approprié sur l'ensemble panneau (10),
des moyens de fixation de latte de bois (23, 33) configurés pour fixer la latte de bois (101) positionnée sur au moins une autre latte de bois (111),
des moyens de préhension de panneau d'isolation (24, 34) configurés pour saisir un panneau d'isolation (102),
des moyens de positionnement de panneau d'isolation (2A, 3A) configurés pour positionner le panneau d'isolation (102) saisi à l'emplacement approprié sur l'ensemble panneau (10),
et **en ce que** les systèmes d'outillage (2, 3) reçoivent l'instruction par l'organe de commande d'outillage de sorte que, si la longueur d'une latte de bois (L₁₀₁) dépasse un seuil (L) prédéterminé, les moyens de préhension de latte de bois (21, 31) saisissent la latte de bois à différentes parties (101A, 101B) et se déplacent les uns par rapport aux autres afin d'aligner leurs lignes centrales (C₂₁, C₃₁) et corriger la rectitude de la latte de bois (S₁₀₁).

2. Dispositif d'assemblage selon la revendication 1, dans lequel si la longueur d'une latte de bois (L₁₀₁) dépasse un seuil (L) prédéterminé, le mouvement relatif des moyens de préhension de latte de bois (21, 31) est réalisé de sorte qu'une pression latérale est générée sur au moins une partie de la latte de bois (101A).

3. Dispositif d'assemblage selon la revendication 1 ou 2, dans lequel, si la longueur d'une latte de bois (L₁₀₁) dépasse un seuil (L) prédéterminé, le mouvement relatif des moyens de préhension de latte de bois (21, 31) est réalisé de sorte que la rectitude de la latte de bois (S₁₀₁) atteint la rectitude nominale (S) de la latte de bois.

4. Dispositif d'assemblage selon l'une quelconque des revendications précédentes, dans lequel, si la longueur d'une latte de bois (L₁₀₁) ne dépasse pas un seuil (L) prédéterminé, la latte de bois est saisie et positionnée par les moyens de préhension de latte de bois et les moyens de positionnement de latte de bois uniquement d'un système d'outillage (2).

5. Dispositif d'assemblage selon l'une quelconque des revendications précédentes, dans lequel le seuil (L) prédéterminé est compris entre 50 et 150 centimètres, est de préférence compris entre 100 et 130 centimètres et est de préférence d'environ 120 centimètres.

6. Dispositif d'assemblage selon l'une quelconque des revendications précédentes, dans lequel les systèmes d'outillage (2, 3) reçoivent une instruction de sorte qu'une pression est réalisée, par les moyens de préhension de latte de bois (21, 31) et les moyens de positionnement de latte de bois (2A, 3A), sur des parties de la latte de bois (101C) où les moyens de fixation de latte de bois (23, 33) sont prévus pour fixer la latte de bois (101) sur les lattes de bois des couches (111) adjacentes.

7. Dispositif d'assemblage selon l'une quelconque des revendications précédentes, dans lequel au moins l'un des moyens de préhension de latte de bois (21, 31) comprend un dispositif de préhension (210, 310).

8. Dispositif d'assemblage selon l'une quelconque des revendications précédentes, dans lequel au moins l'un des moyens de fixation de latte de bois (23, 33) comprend une série de tournevis (230).

9. Dispositif d'assemblage selon l'une quelconque des revendications précédentes, dans lequel les systèmes d'outillage (2, 3) reçoivent une instruction par l'organe de commande d'outillage de sorte qu'un panneau d'isolation (102) est saisi et positionné par les moyens de préhension de panneau d'isolation et les moyens de positionnement de panneau d'isolation uniquement d'un système d'outillage (2).

10. Dispositif d'assemblage selon l'une quelconque des revendications précédentes, dans lequel au moins l'un des moyens de préhension de panneau d'isolation (24, 34) comprend une série d'aiguilles (240, 340) conçues pour pénétrer au moins partiellement dans un panneau d'isolation et être éjectées de ce dernier.

11. Dispositif d'assemblage selon l'une quelconque des revendications précédentes, comprenant en outre une structure de support (4) conçue pour supporter l'ensemble panneau (10) lorsqu'il est actionné par les outils (2, 3).

12. Procédé pour fabriquer un ensemble panneau (10) au moyen du dispositif d'assemblage (1) selon l'une quelconque des revendications précédentes, dans lequel l'ensemble panneau (10) comprend une pluralité de couches superposées (100, 110, 120 ...) qui comprennent une série de lattes de bois (101, 103, 105 ... 111, 113, 115 ...), chaque latte de bois ayant une longueur donnée (L₁₀₁) et une rectitude donnée (S₁₀₁), au moins l'une des couches comprenant également une série de panneaux d'isolation (102, 104, 106 ...), les lattes de bois de chaque couche (101, 103, 105 ...) étant fixées sur les lattes de bois des couches (111, 113, 115) adjacentes, **caractérisé en ce que** le procédé comprend une série de cycles d'assemblage de couches, chaque cycle d'assemblage de couche consistant à assembler une couche de l'ensemble panneau (100, 110 ...) et comprenant les étapes consistant à :
- actionner un panneau d'isolation (102) avec un système d'outillage (2) en :
o saisissant le panneau d'isolation avec des moyens de préhension de panneau d'isolation (24),
o positionnant le panneau d'isolation avec des moyens de positionnement de panneau d'isolation (25) entre deux lattes de bois de la même couche (101, 103),
o comprimant le panneau d'isolation, et
o libérant le panneau d'isolation,
- actionner une latte de bois dont la longueur ne dépasse pas un seuil (L) prédéterminé avec un système d'outillage (2) en :
o saisissant la latte de bois avec les moyens de préhension de latte de bois (21),
o positionnant la latte de bois avec les moyens de positionnement de latte de bois (2A) sur au moins une latte de bois d'une couche adjacente,
o fixant la latte de bois conjointement à au moins une latte de bois d'une couche adjacente avec les moyens de fixation de latte de bois (23), et
o libérant la latte de bois,
- actionner une latte de bois (101) dont la longueur (L₁₀₁) dépasse un seuil (L) prédéterminé avec deux systèmes d'outillage (2, 3) en :
o saisissant différentes parties de la latte de bois (101A, 101B) avec les moyens de préhension de latte de bois de chaque outil (21, 31),
o déplaçant les moyens de préhension de latte de bois (21, 31) les uns par rapport aux autres avec les moyens de positionnement de latte de bois de chaque outil (2A, 3A) pour corriger la rectitude de la latte de bois (S₁₀₁),
o positionnant la latte de bois avec les moyens de positionnement de latte de bois de chaque outil (22, 24) sur au moins une latte de bois d'une couche (111) adjacente,
o fixant la latte de bois conjointement avec au moins une latte de bois d'une couche (111) adjacente avec les moyens de fixation de latte de bois (23), et
o libérant la latte de bois.

13. Procédé selon la revendication 12, dans lequel lors de l'actionnement d'une latte de bois (101) dont la longueur (L₁₀₁) dépasse un seuil (L) prédéterminé, le mouvement relatif des moyens de préhension de latte de bois (21, 31) est réalisé de sorte qu'une pression latérale est générée sur au moins une partie de la latte de bois (101A) et de sorte que la rectitude de la latte de bois (S₁₀₁) atteint une rectitude nominale (S) de latte de bois.
